# EUROPEAN PATENT APPLICATION

(11) **EP 1 874 005 A1**
(43) Date of publication of application: **02.01.2008**
(21) Application number: 06013175.2
(22) Date of filing: 27.06.2006
(51) Int. Cl.: H04L 29/12, H04L 12/56

(54) **A personal network comprising a plurality of clusters**

(71) Applicant: Koninklijke KPN N.V., 2516 CK The Hague (NL)
(72) Inventor: Ait Yaiz, Rachid, 7331 NL Apeldoorn (NL); Peeters, Marc Eric, 2612 CT Delft (NL); Den Hartog, Frank Theodore Henk, 2251 CE Voorschoten (NL)
(74) Representative: Wuyts, Koenraad Maria

(57) **Abstract**

The network (PN1) comprises a plurality of private sub-networks (C1, C2, CI, CII), which can be coupled to each other by means of a public network (150). The clusters comprise a gateway (GW1, GW2, GWI, GWII) to the external network and at least one node. The nodes have local addresses, which are used for transmitting a packet to other nodes in the same cluster. The local addresses are unique within the same cluster, but possibly overlapping with the local addresses of nodes outside the cluster. Furthermore, the nodes have overlay addresses, which are used by the nodes in the other clusters. The network comprises overlay network routing means, which store the local addresses and the overlay addresses of all the nodes in the network and a mapping between them. The gateway of the cluster forwards a packet having an overlay address originating from a node in its cluster to the overlay network routing means. The overlay network routing means translate the overlay address in the packet to the local address of the destination node and forward the packet to the gateway of the cluster to which the destination node having the overlay address belongs. The gateway of the cluster of the destination node routes the packet to the destination node based on the local address thereof.

## Description

### BACKGROUND OF THE INVENTION

### Technical field

The present invention relates to a network comprising a plurality of clusters, which can be coupled to each other by means of at least an external network.

The present invention furthermore relates to overlay routing means, a gateway and a method for use in a network.

### Description of related art

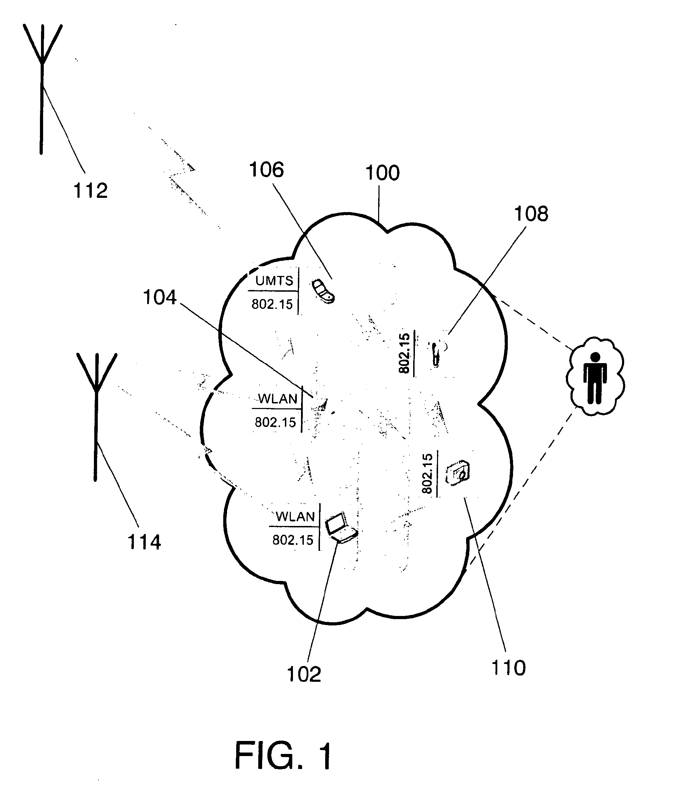

With increasing wealth, people are becoming more mobile and carry an increasing number of (portable) electronic devices with them. Often these devices can be connected relatively easily to the public mobile network, but local interaction between them is still rather limited. In the near future, however, it is expected that these devices will form a Personal Area Network (PAN) with the help of recently developed Wireless Personal Area Networking (WPAN) technologies such as Bluetooth. A PAN is the network of devices in the personal area (operating space) of the user. An example of a PAN is given in Figure 1.

The PAN 100 that the user in Figure 1 is carrying contains a laptop 102, a PDA 104, a mobile phone 106, a wireless headset 108 and a digital camera 110. The devices are networked with each other by means of IEEE 802.15 technology. The mobile phone, the laptop and the PDA can also communicate to the rest of the world by means of a network 112 using Universal Mobile Telecommunications System (UMTS) technology or by means of a network 114 using Wireless Local Area Network (WLAN) technology.

A Personal Network is envisaged as the next step in achieving ambient communication between people's electronic devices. In the various private domains of the user (home, car, office etc.) clusters of networked devices appear that share content, data, applications, and resources with each other, and communicate with the rest of the world by means of a common gateway, for instance the Residential Gateway (RG).

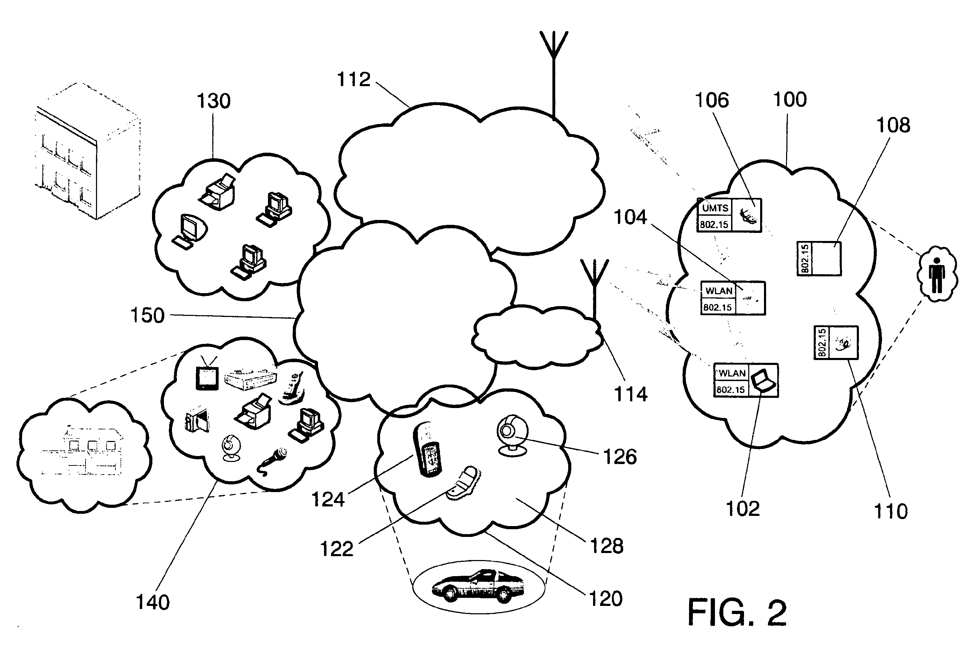

Often, a user wants to access remote content, applications, or resources that are located in one of his remote private domains, i.e., a private domain in which the user is not physically present. A Personal Network provides the technology needed to interconnect the various private clusters or networks of a single user seamlessly, at any time, and at any place. Figure 2 shows a Personal Network, consisting of four private networks (clusters): the PAN 100, which was already shown in figure 1, a Vehicle Area Network 120 comprising a cell phone 122, a GPS-receiver 124, a camera 126 and a navigation system 128, an Enterprise Network 130 and a Home Network 140. These private networks are interconnected by means of public networks like the Universal Mobile Telecommunications System (UMTS) network 112, the Wireless Local Area Network (WLAN) 114 and/or any other IP based core network 150.

To be able to route traffic over the public internet, IP addresses must be globally unique. As a result of the address size and the way address classes are divided, the maximum number of (available) IP addresses that can be used in IP version 4 is low compared to the total number of IP enabled devices. A solution is provided by reusing IP addresses. Addresses used by devices inside a private domain do not need to be globally unique, as long as traffic to and from these devices is limited to that private network only. The addresses, which are reserved for use in private domains, are called "private IP addresses" and consist of three ranges: 10.0.0.0/8, 172.16.0.0/12 and 192.168.0.0/16. These IP addresses cannot be routed over the internet. When devices in private domains want to communicate with a particular host on the internet, a public source IP address must be provided in each packet that is sent to that host.

In existing systems tunnelling protocols are used between the private networks. Tunnelling is the transmission of data intended for use only within a private (usually corporate) network through a public network in such a way, that the routing nodes in the public network are unaware that the transmission is part of a private network. Tunnelling is generally done by encapsulating the private network data and protocol information within the public network transmission units so that the private network protocol information appears to the public network as data. As a result, tunnelling allows the use of the public Internet to convey data on behalf of a private network.

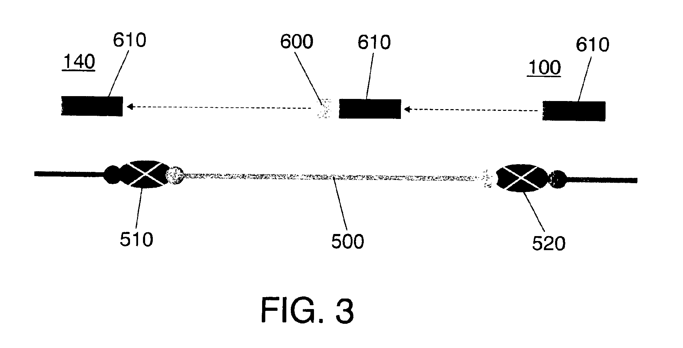

Figure 3 shows the tunnelling of a packet. It shows a Point-to-Point Protocol (PPP) connection between the Home Network 140 and the PAN 100. With the tunnel connection, the two private networks can be connected in such way, that a device in the PAN is able to send a packet to a private IP address of a device in the home network over the public internet. At both ends of the tunnel 500 a gateway 510, 520 comprising a router is located. If the routing tables in both tunnel gateways 510, 520 are configured properly, the router in the PAN 100 (e.g. the server) adds an IP header 600 containing the public IP address of the gateway 510 to each packet 610. It then sends the new packet, containing the original packet 610 as data, to the public Internet. By means of normal Internet routing, the packet is delivered at the end of the tunnel to the gateway 510. This gateway 510 strips off the tunnel header, obtaining the original packet again, and makes sure that the packet is sent to the correct home network device using the private IP address. So, because of the tunnel, the two different domains act like if they were two different subnets of one private domain. This means that all messages can easily be passed on to the other 'subnet', if routing at both ends is supported.

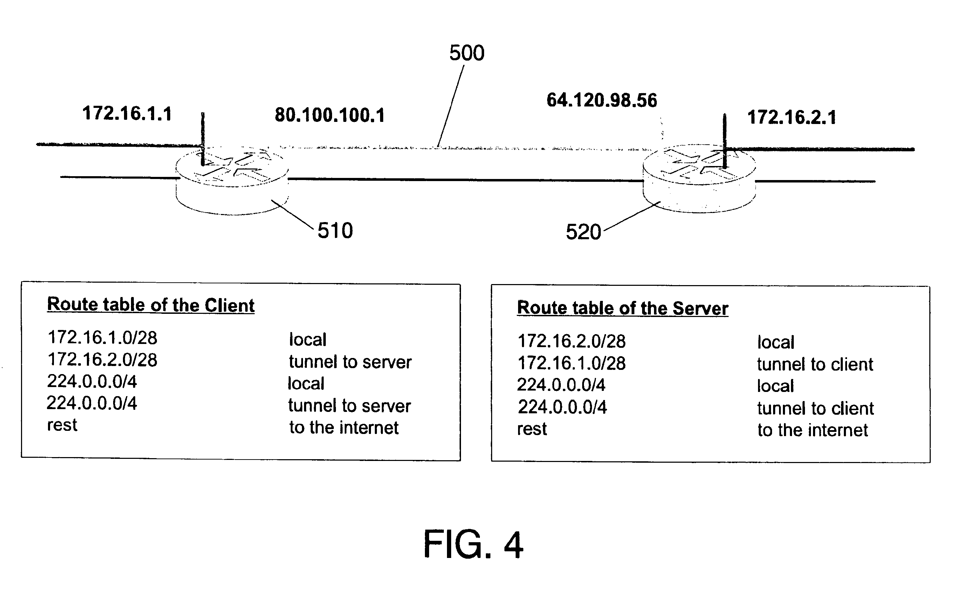

So, with tunnelling the original packet is extended with new IP headers that can be routed over the internet. The original packet is left unmodified. As a result, the tunnelled packet can be any type of packet, even multicast messages. The only requirement for routing the multicast messages through the tunnel is that the router must support multicast-routing and the route tables must be configured accordingly. Figure 4 shows an example of a client gateway 510 and a server gateway 520 that can tunnel multicast messages and other packets containing private IP addresses to the other private network, together with the matching routing tables.

In this example the client gateway 510 is located in a private network in the 172.16.1.0/28 private IP range, with router interface 172.16.1.1 and public IP address 80.100.100.1. The other private network containing the server gateway, at the other end of the tunnel 500, is in the 172.16.2.0/28 private IP range, with router interface 172.16.2.1 and public IP address 64.120.98.56.
- Packets destined for a private IP address in the same private network are sent to the router's internal interface.
- Packets sent to a private IP address in the other private domain are tunnelled to the public IP address of that private network.
- IP multicast addresses, also known as group addresses, are in the class D range of 224.0.0.0/4. Multicast addresses in the range of 224.0.0.0/24 are reserved for the local subnet and are not forwarded by IP routers regardless of the Time to Live (TTL) in the IP header. Multicast messages in the rest of the 224.0.0.0/4 range are both sent to the internal interface of the router and tunnelled to the public IP address of the other private network.
- Packets to a public IP address are sent to the external interface of the router;

So, by using a tunnel between the two private networks, multicast messages can be exchanged between those private networks, even though a public network is located in between. Furthermore, all devices in the Personal Network can be reached on their private IP addresses, even though a public network is crossed.

The solution depicted with reference to figures 3 and 4 requires all private networks in a PN to be connected to each other through tunnels. This can be done in a distributed manner, such that all private networks of the PN connect to each other or centralized, such that all private networks of the PN connect to one central point. Independent of the choice for a distributed or centralized architecture, problems arise. A tunnel between two clusters or private networks should be set up in such a way, that remote devices can communicate with each other. This requires a cluster gateway (a router) in each cluster to have a properly configured tunnel end-point.

When a cluster gateway receives an IP packet, it must decide whether the packet is addressed to the router (and should be delivered locally) or whether the packet is addressed to another system (and should be handled by the forwarder). There is also a hybrid case, where certain IP broadcasts and IP multicasts are both delivered locally and forwarded. As a result of these rules for routers that were stated above, no unicast messages will be duplicated in cases where two devices in a PN have the same private (local) IP address. These messages will always be delivered locally. A concrete example of the result of these rules is when two clusters in the PN use overlapping private IP address ranges (e.g., 10.0.0.0/8). In such case, packets generated in one of these two domains will only be delivered locally, even though it might have been the purpose to be sent to a remote device in the cluster with the overlapping IP address range. In large PNs with many clusters, this is clearly an issue. The probability that clusters use overlapping IP address ranges increases, but users should not need to and might not be capable or even allowed to reconfigure these clusters.

Therefore it is an object of the present invention to provide a (personal) network, properly interconnecting all its clusters (e.g. private networks) regardless of the used local IP address range in the clusters.

### SUMMARY OF THE INVENTION

This and other objects of the invention are achieved by a network according to independent claim 1, overlay network routing means according to independent claim 14, a gateway according to independent claim 15, a method according to independent claim 16, computer programs according to claims 17 and 18, a computer readable medium according to claim 19 and a carrier medium according to claim 20. Favourable embodiments are defined by the dependent claims 2-13.

According to the invention, a network is provided. The network comprises a plurality of clusters, generally private sub-networks, which can be coupled to each other by means of at least an external network, generally a public network. The clusters comprise a gateway to the external network and at least one node. The nodes in the network have local addresses, which are used for transmitting a packet to other nodes in the same cluster. The local addresses are unique within the same cluster, but possibly overlapping with the local addresses of nodes outside the cluster. Furthermore, the nodes have at least one overlay address, which is used by the nodes of at least one cluster, for transmitting a packet to the nodes in the other clusters. The at least one overlay address of a node is different from the at least one overlay address of the other nodes in the network. The network comprises overlay network routing means, which store the local addresses and the overlay addresses of all the nodes in the network and a mapping between them. The gateway of the at least one cluster forwards a packet having an overlay address as destination address originating from a node in its cluster to the overlay network routing means. The overlay network routing means translate the overlay address in the packet to the local address of the destination node and forward the packet to the gateway of the cluster to which the destination node having the overlay address belongs. The gateway of the cluster of the destination node routes the packet to the destination node based on the local address thereof.

The invention is based on the recognition that by using the overlay addresses for routing packets to nodes in other clusters, the local addresses of the nodes may have overlapping ranges. The overlay network routing means carry out the necessary address translation and packet routing. Hereby, the gateways and the nodes can be kept relatively simple. The nodes only need to know their own local address and the overlay addresses of devices that they want to communicate with.

Preferably, the overlay network routing means translate the local address of the source node into the overlay address thereof and include said overlay address as source address into the packet that is forwarded to the gateway of the cluster of the destination node. In this way the source node will be addressable by the destination node, even if multiple devices with the same local address exist in different clusters of the network.

In a preferred embodiment the nodes additionally have at least one further overlay address, which is used by the nodes of at least one further cluster, for transmitting a packet to the nodes in the other clusters. The at least one further overlay address of a node is different from the at least one further overlay address of the other nodes in the network. The overlay network routing means stores the local addresses and the further overlay addresses and a mapping between them. The gateway of the at least one further cluster forwards a packet having a further overlay address as destination address originating from a node in its cluster to the overlay network routing means. The overlay network routing means translate the further overlay address to the local address of the destination node and forwards the packet to the gateway of the cluster to which the destination node having the further overlay address belongs. The use of one or more further overlay addresses for the nodes is needed for example in the case that the local address range of a cluster overlaps with the overlay address range used in the network. In this case, the nodes of this cluster use one of the further overlay addresses for transmitting packets to nodes in other clusters.

The different overlay addresses belong to different address ranges, whereas these address ranges for the ease of implementation are preferably disjunctive.

In case that the address ranges of the different overlay addresses are not disjunctive, it is ambiguous from which address range the address of a destination node in a packet is. In this case, the overlay network routing means should be further adapted for using either the mapping between the local addresses and the overlay addresses or the mapping between the local addresses and the further overlay addresses for the step of translating the overlay address or the further overlay address of the destination node into the local address thereof, depending on the source cluster that the packet is received from. If the nodes of the source cluster use overlay addresses for addressing other nodes in the network, the mapping between the local addresses and the overlay addresses is used. If the nodes of the source cluster use further overlay addresses for addressing other nodes in the network, the corresponding mapping between the local addresses and the further overlay addresses is used.

In a further preferred embodiment the overlay network routing means are adapted for translating the local address of the source node into either the overlay address thereof or into (one of) the further overlay address(es) thereof, depending on the destination cluster that the packet is to be routed to. The overlay address or further overlay address is included as source address into the packet to be forwarded to the gateway of the cluster of the destination node. In an embodiment of the invention, the nodes of the destination cluster know the nodes of the cluster of the source node either by the overlay address or by (one of) the further overlay address(es) thereof. By translating the source address into the "right" overlay address the source node will be addressable by the destination node.

Preferably, the gateways and the overlay network routing means encapsulate the packet in order to forward it to each other, for example by using a well-known tunnelling protocol. Tunnelling is generally done by encapsulating the private network data and protocol information within the public network transmission units so that the private network protocol information appears to the public network as data. As a result, tunnelling allows the use of the public network to convey data on behalf of a private network.

The invention is particularly useful in networks, using Internet Protocol version 4 addresses. According to Internet Protocol version 4 three ranges of addresses, 10.0.0.0/8, 172.16.0.0/12 and 192.168.0.0/16 are reserved for use in private domains and are called "private IP addresses". The gateways of the clusters and the overlay network routing means all have globally unique addresses from the address range used for communication over public networks. The nodes of the clusters have local addresses and preferably also overlay addresses from one of the three ranges reserved for private addresses.

Preferably, the overlay network routing means are embodied in a centralized overlay network router. A centralized architecture has several advantages over a distributed architecture. The functionality is concentrated in only one device instead of several devices spread over the network. Security issues are more easily handled and there are fewer tunnels needed.

The overlay network router is preferably a stand-alone device located at the premises of a provider. Alternatively, the overlay network router is collocated with one of the gateways of the clusters in the network. In this case there is a single node comprising two logical entities: one with the gateway functionality and another with the overlay network router functionality. No encapsulating of packets is needed between the gateway entity and the overlay network router entity. The packets are internally forwarded from the gateway entity to the overlay network routing entity.

The overlay network routing means may also be distributed over at least some of the gateways of the clusters in the network.

Alternatively, a part of the overlay network routing means is distributed over at least some of the gateways of the clusters in the network and another part is embodied in a centralized node. This "hybrid mode" may be particularly useful for route optimization, in case that some of the clusters are used far from the centralized node, for example in a foreign country.

According to the invention also an overlay network router, a gateway and a method for use in the network are provided.

Preferably, the invention is implemented by computer programs loaded to the overlay network router means and the gateways.

These and other aspects of the invention will be apparent from and elucidated with reference to the embodiments described hereinafter.

### BRIEF DESCRIPTION OF THE DRAWINGS

The invention will be better understood and its numerous objects and advantages will become more apparent to those skilled in the art by reference to the following drawing, in conjunction with the accompanying specification, in which:
Figure 1 shows a Personal Area Network according to the state of the art.
Figure 2 shows a Personal Network consisting of various interconnected private clusters according to the state of the art.
Figure 3 shows the tunnelling of a packet according to the state of the art.
Figure 4 shows two gateways according to the state of the art that can tunnel multicast messages.
Figure 5 shows a Personal Network according to a first embodiment of the invention, wherein the Overlay Network Router is a centralised server.
Figures 6a-6e show the packet transmission between nodes from different clusters of the Personal Network of figure 5.
Figure 7 show the Personal Network of figure 5 together with an additional Personal Network.
Figures 8a-8e show the packet transmission between nodes from different clusters of the additional Personal Network of figure 7.
Figure 9 shows two Personal Networks, which are partially overlapping.
Figures 10a-10e show the packet transmission between nodes from different clusters of one of the Personal Networks shown in figure 9.
Figure 11 shows a Personal Network according to a second embodiment of the invention, wherein the Overlay Network Router is collocated with one of the gateways of the cluster.
Figures 12a-12d show the packet transmission between nodes from different clusters of the Personal Network of figure 11.

Throughout the figures like reference numerals refer to like elements.

### DETAILED DESCRIPTION OF THE PRESENT INVENTION

According to the invention an Overlay Network Router (ONR) is introduced, which is able to cope with the problems present in the prior art. With the ONR, it is possible to inter-connect private domains (clusters) regardless of the used private IP subnets.

Theoretically, a PN can be created using both a centralized and a distributed architecture. In a centralized architecture the ONR is implemented in a (single) central server, in a distributed architecture the ONR is implemented spread over several servers. Both types of architectures have advantages and drawbacks. Overall, the advantages of a centralized architecture compared to a distributed one are in favour, because of, among others, the following:
1. In case of new versions of software, for example new or updated Service Discovery Protocol (SDP) releases or updated tunnel software, a centralized model is easier to update, since the update has only to take place once. Furthermore, the update can be managed by a trained professional. Then, the user does not need to do it himself and still all his new devices will be supported.
2. A central server can be used to do the resource consuming work that otherwise, in a decentralized model, would require more from the cluster devices. For example, in a distributed environment where all private networks are directly connected to each other through tunnels, a handover of a cluster results in the re-setting up a tunnel to all other private networks again. In a centralized architecture, only one tunnel (to the central server) has to be re-setup.
3. In a centralized architecture, only one tunnel per private network should be maintained. In a distributed architecture, a tunnel to all other private networks should be maintained. So, with *n* private networks, a centralized architecture results in n tunnels with only one tunnel per gateway, where in a distributed architecture *n(n* -1)/2 tunnels are needed. In a PN (with a large *n*) this can require too much from the gateways.
4. Since much private information is routed over the public internet when using a PN, security plays an important role. A central server could be configured by a trained professional, instead of a user that might not have much security knowledge. In a case where all gateways are connected to a central server, the security requirements can be configured / demanded centrally. The provider of the central server can choose the proper security settings and require them from the user, too. In a distributed environment, users are much more vulnerable since they are responsible for security themselves, but they might not know anything about security and therefore might end up with an insecure PN.
5. Devices can be bought from many different manufacturers and therefore each gateway might contain a different tunnel protocol. In a distributed environment this may lead to interoperability problems. For example, situations might occur, where tunnel software from the gateway of cluster 1 is not able to interoperate with the tunnel software on gateway 2. In a centralized architecture, the PN can be implemented in such way that it supports many tunnel implementations, avoiding the interoperability problems. Furthermore, the central server can be maintained in such way that it is always updated to latest releases.

Overall, since many PN issues can be taken care of centrally, the user can subscribe to the PN service as a whole. As a result, the user does not need to have much knowledge about the configuration, which SDPs used on the devices in his PN, the firmware, the supported tunnel software, etc. The only concern of the user is to have a gateway in each cluster that connects his devices to the rest of the PN. In this way, devices need not to be provided by a single manufacturer, which would be an undesirable situation.

The central server can be located at the Personal Network Provider's premises, or can be a user device (e.g. the residential gateway at home). However the latter would, most probably, require the user to configure and maintain the ONR himself. In that case, a third party (e.g., Personal Network Provider) can possibly specialize in remote configuration and management of ONRs.

As mentioned before, the central part of the present invention is the ONR. Except in case of route optimization, all traffic sent between devices in different private networks, will be routed through this server. For connecting the different private networks to this central server, tunnels will be used between all cluster gateways and the ONR. The ONR keeps track of all devices in the entire PN and stores information about them in a table. This table can be used for many purposes. First, it is used to be able to identify all devices in the PN, even though they might be using the same private IP addresses, locally. This information can then be used for taking care of routing packets into the correct tunnel and to the correct device(s).

The creation of the abovementioned table as well as its exploitation relies on a number of components and mechanisms. Except for the cluster gateway and its packet buffer, the components reside in the ONR.

### Address Translator (AT)

Each node in the PN must be uniquely identifiable by other PN devices. As a PN user has little or no control over the address ranges used in the clusters, the original (local) address ranges are not suitable for PN device addressing. In other words, there must be a mediating entity in the PN that is able to distinguish between, and address different PN devices without requiring them to modify their local addresses.

The ONR is able to distinguish between and address the different PN devices using an additional PN device identifier, namely, the ID of the tunnel to the cluster to which a PN device belongs. The ONR can use this information to distinguish between devices with identical IP addresses.

As the PN devices themselves have no knowledge of the tunnels between the different clusters and the ONR, the PN devices must have other means to distinguish between and address the different PN devices. For this, the Overlay Network Device Address (ONDA) is introduced. The ONDA of a PN device is the IP address at which another PN device can reach that particular PN device. Obviously, and seen from the point of view of the sending device, there has to be a unique mapping between the ONDA of a PN device on the one hand and on the other hand the local IP address of that device together with the tunnel between the cluster it belongs to and the ONR. In this way, the hard work of distinguishing between all devices can be done at the ONR, and, furthermore, the devices only need to know their own local address and the ONDA of the device they want to interact with.

In the ONR, an Address Translator exists that translates IP source and destination addresses in order to make each PN member distinguishable and addressable for other PN devices. Each PN device has an ONDA for each other PN device outside the cluster it resides in, whereas it is not needed that a PN device knows its own ONDA. In principle the nodes can also use ONDAs for local communication with other nodes in their own cluster. In fact, PN devices use their (private) local address as a source address when sending packets. When a PN device wants to communicate with another PN device within the same cluster, that PN device is addressed by its local address, and no address translation takes place. However, when a PN device wants to address another PN device outside its own cluster, it uses the ONDA of that PN member as the destination address of the packet, while inserting its local address as the source of that packet. Once arrived at the ONR, the source address of that packet is translated, without the sender's knowledge, into the ONDA of the sending node. In this way, the sending device will be uniquely addressable by the receiving device, even if multiple devices with the same local IP address as the sending device exists in different inter-connected clusters.

As a result, all devices can be identified with a unique IP address, but the devices themselves do not need to know this. All they need to know is their local IP address and the ONR takes care of the rest by translating it to their ONDA.

### Overlay Network Device Address Controller (ONDAC)

The Overlay Network Device Address Controller (ONDAC) makes sure that each new PN device (i.e., device added to the PN) can be uniquely identified and addressed by all the other PN devices. For this, the ONDAC assigns one or more Overlay Network Device Addresses (ONDAs) to each PN device.

PN devices use the ONDA of the other PN devices to send them packets, whereas they do not need to know their own ONDAs. Furthermore, PN devices can be known under different ONDAs by different PN devices. The reason for the latter is to solve the problem of overlapping address ranges, which occurs in case of a single ONDA per PN device.

### Location Update Mechanism (LUM)

The Location Update Mechanism (LUM) makes sure the ONR is aware of the logical location of the gateways of the PN clusters. Whenever a cluster has changed its Point of Attachment (PoA), the ONR is updated with the new IP address of the gateway, from which the gateway is trying to setup a new connection (see Automatic Tunnel Setup Protocol). For this, the LUM has to maintain a second identity (e.g., some unique key) of each gateway in order to be able to distinguish between reconnections of moved cluster gateways and new connections.

### Virtual Router

The virtual router is the component that routes packets between the input tunnel and the appropriate output tunnel. It does this based on the source tunnel and the destination ONDA.

### Automatic Tunnel Setup Protocol (ATSP)

Communication between PN devices belonging to different clusters takes place, by default over two tunnels, i.e., one tunnel from each cluster (gateway) to the ONR. Whenever a cluster is to be added to a PN, the gateway of that cluster is requested to setup a tunnel to the ONR of that PN. The request can, for instance, come from a device that is served by that particular gateway or from the user of that gateway (e.g., in case the gateway is a mobile phone). When a tunnel setup from a cluster gateway to the ONR is initiated, the ONR should be able to find out whether the cluster gateway initiating the connection has already been registered with that ONR.

In case the cluster gateway that is trying to setup a tunnel to the ONR has not yet been registered with the ONR, then that gateway is registered with the ONR. This means that the following actions are undertaken:
- The ONR requests an update of the routing table of the gateway with an ONDA range that is not yet used by that gateway.
- The ONR sets its address translator(s) to correctly translate IP addresses of packet to and from the cluster being registered.
- The ONR sets its virtual router to correctly route packets between the new cluster and the already registered clusters.

In case the cluster gateway that is trying to setup a tunnel to the ONR has already been registered with the ONR, then the registration of that gateway with the ONR is modified by replacing the old tunnel-endpoint binding in the address translator and in the virtual router by the new one. In other words, this means that:
- IP addresses of packets to and from the new tunnel should be translated in exactly the same way as IP addresses of packets to and from the old tunnel.
- The virtual router must route packets from the new tunnel end-point in exactly the same way as packets from the old tunnel end-point. Furthermore, packets that, before the update, were routed to the old tunnel end-point should now be routed to the new tunnel end-point.

When a cluster gateway that has already been registered with the ONR sets up a tunnel to that ONR, e.g., because the cluster gateway temporarily lost its connection, or, for instance, because the cluster gateway changed its Point of Attachment, none of the PN devices (including those in the re-attached cluster) notices any change in addressing.

### Packet Buffer

The tunnels between the cluster gateways and the ONR are re-setup each time the connection between the cluster gateway and the ONR is lost (e.g., because of mobility). After re-setup of a tunnel, the PN devices can continue their communication in the same way as before losing the connection, i.e., without having to change addressing. However, during the period that the connection is lost PN devices from the disconnected cluster and from outside that cluster possibly still try to communicate with each other. In order to minimize the loss of packets sent between PN devices, both the ONR and the cluster gateways should contain a packet buffer that is able to temporarily store the packets until the connection is restored. In this way, by buffering packets in case a tunnel is temporarily down (e.g. during mobility) this mechanism tries to minimize the number of lost packets. After re-setting up the tunnel, the packets are sent.

### Cluster Gateways

The cluster gateway is not an internal part of the ONR. In fact, the cluster gateway is the device in the cluster that provides connectivity of the PN devices in that cluster with the remaining PN devices, and possibly with the internet. In order to fulfil this task, the cluster gateway must have the following functionality:
- it must be able to set up a tunnel with the ONR
- it must be able to forward all traffic destined for the PN devices outside that cluster to the ONR of that PN by putting that traffic on the respective tunnel to the ONR.
- once a tunnel to an ONR is setup, the gateway should always immediately try to re-set up the tunnel after a lost connection.

### First Embodiment

According to a first embodiment of the invention, the ONR is a central server that is reachable from the gateways by using a public IP address.

### The ONR

The operation of the ONR will be explained using three examples. First we present a sample table of an ONR, then we explain how PN devices become able to communicate with each other.

### An example of a ONR central table

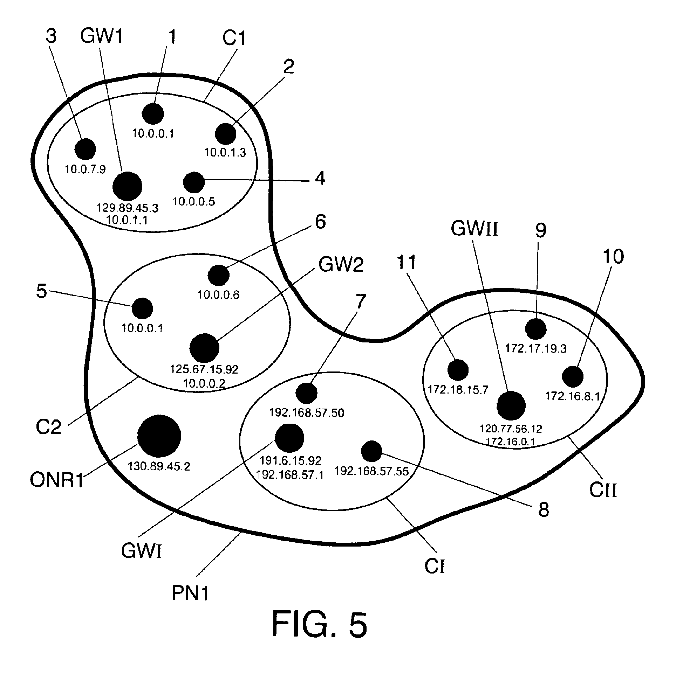

Table 1 shows the ONR central table of the ONR1 of PN1 shown in figure 5. PN1 consists of four clusters cluster 1 (C1), cluster 2 (C2), Cluster I (CI) and cluster II (CII). Each of the clusters has a gateway (GW1, GW2, GWI, GWII) for communicating to the public network and the ONR1. Each cluster comprises a plurality of nodes (numbered consecutively in the figure from 1 to 11). In the figure the local IP addresses of the nodes and the gateways are depicted as well as the public IP addresses of the gateways and ONR1.

As can be seen, the ONR central table exists of two parts, namely, a node identification part (the upper part) and a tunnel identification part (the lower part).

**Table 1: ONR 1 central table**

| **Node ID** | **ONDA 1** | **ONDA 2** | **ONDA 3** | **Local address** | **Public IP (CoA)** | | |
|---|---|---|---|---|---|---|---|
| | | | | | | | |
| 1 | 192.168.6.1 | 172.18.12.1 | 10.18.143.1 | 10.0.0.1 | 129.89.45.3 | | |
| 2 | 192.168.6.2 | 172.18.12.2 | 10.18.143.2 | 10.0.0.5 | 129.89.45.3 | | |
| 3 | 192.168.6.3 | 172.18.12.3 | 10.18.143.3 | 10.0.1.3 | 129.89.45.3 | | |
| 4 | 192.168.6.4 | 172.18.12.4 | 10.18.143.4 | 10.0.7.9 | 129.89.45.3 | | |
| | | | | | | | |
| 5 | 192.168.6.33 | 172.18.12.33 | 10.18.143.33 | 10.0.0.1 | 125.67.15.9 | | |
| 6 | 192.168.6.34 | 172.18.12.34 | 10.18.143.34 | 10.0.0.6 | 125.67.15.9 | | |
| | | | | | | | |
| 7 | 192.168.6.49 | 172.18.12.49 | 10.18.143.49 | 192.168.57.50 | 191.6.15.92 | | |
| 8 | 192.168.6.50 | 172.18.12.50 | 10.18.143.50 | 192.168.57.55 | 191.6.15.92 | | |
| | | | | | | | |
| 9 | 192.168.6.69 | 172.18.12.69 | 10.18.143.69 | 172.17.19.3 | 120.77.56.12 | | |
| 10 | 192.168.6.65 | 172.18.12.65 | 10.18.143.65 | 172.16.8.1 | 120.77.56.12 | | |
| 11 | 192.168.6.72 | 172.18.12.72 | 10.18.143.72 | 172.18.15.7 | 120.77.56.12 | | |

| **CLUSTER_ID** | **Source** | **Destination** | | **to cluster 1** | **to cluster 2** | **to cluster I** | **to cluster II** |
|---|---|---|---|---|---|---|---|
| | | | | | | | |
| **cluster 1** | 130.89.45.2 | 129.89.45.3 | | 1,1* | 1,1 | 1.1 | 1,1 |
| **cluster 2** | 130.89.45.2 | 125.67.15.9 | | 1,1 | 1,1 | 1,1 | 1,1 |
| **cluster I** | 130.89.45.2 | 191.6.15.92 | | 1,1 | 1,1 | 1.1 | 1,1 |
| **cluster II** | 130.89.45.2 | 120.77.56.12 | | 1,1 | 1,1 | 1,1 | 1,1 |
| * n,m is source address from ONDA n and destination address from ONDA m | | | | | | | |

The node identification part contains information regarding the PN devices (nodes). This information is needed to make it possible for the PN devices to communicate with each other. For each PN device, the following information is maintained:
- Node ID: is a unique identifier based on which the ONR can uniquely identify the different PN devices. The main purpose of this Node ID is to recognise PN devices that move from one cluster to another in order to assign the same ONDA to them. For the sake of simplicity, we use in this example a small number as a unique Node ID.
- ONDA 1, ONDA 2, and ONDA 3: are three ONDAs that can be assigned to a PN device. Each of the three ONDAs belongs to a different IP address range, whereas these three address ranges for the ease of implementation are preferably disjunctive. Note that the number of ONDA ranges that can be maintained is not restricted to three.
- Local address: is the local IP address of the PN node, i.e., it is the IP address at which it can be addressed within the cluster it resides in. Note that the local address is not necessarily a unique address and that it might be used in different clusters simultaneously.
- Public IP (Care-of address): is the public IP address of the gateway behind which a node resides.

The tunnel identification part provides information about the tunnels between the ONR and the different clusters of the PN. Furthermore, it provides information on how to translate the source and destination IP addresses of packets exchanged between PN devices. If in PN1 in figure 5 a packet is sent from cluster 1 to cluster 2, then that packet is first transported over the tunnel from cluster 1 to the ONR (129.89.45.3 - 130.89.45.2). Then the ONDA 1 of its sender will become its source address. After it is routed to the appropriate tunnel, it will be assumed that its destination address is an ONDA 1 and it will be translated into its corresponding local address. Finally, the packet will be transported over the tunnel from the ONR to cluster 2 (130.89.45.2-125.67.15.92). The next sections provide three concrete examples from which the operation of the ONR will be explained in more detail.

Table 2 shows the configuration needed at the cluster gateways. The primary ONDA range of PN1 is 192.168.6.0/24, which is not used by any of PN1's clusters. Consequently, each PN device knows the other PN devices by their ONDA 1. PN devices in the same cluster also know each other by their local address.

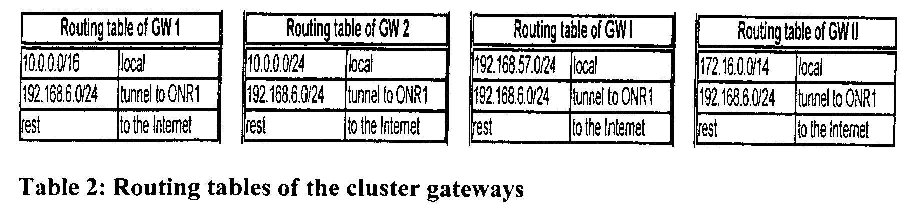

### Example 1

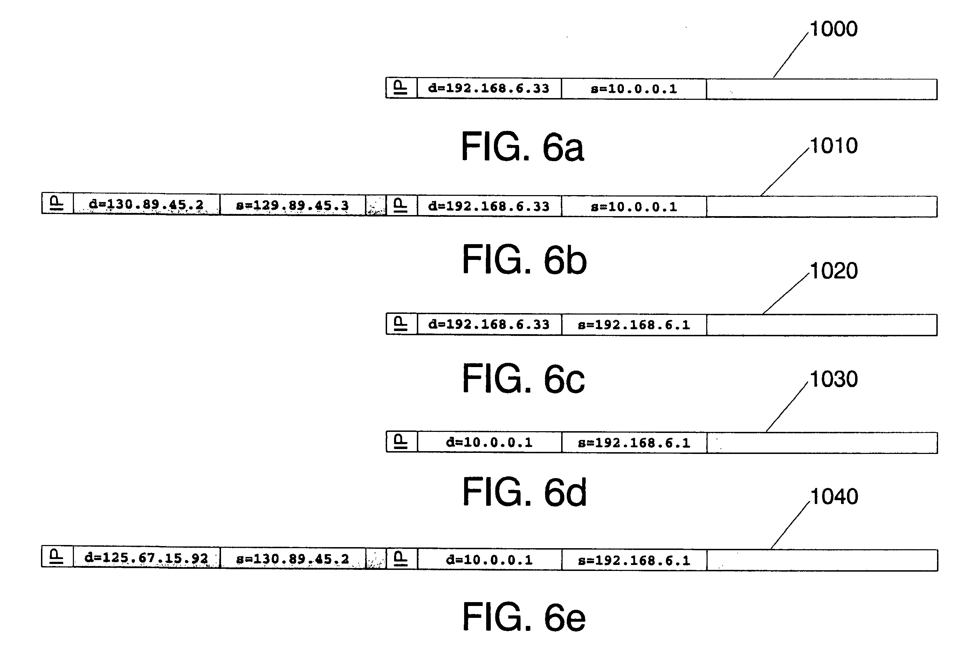

Now, suppose node 1 wants to exchange packets with node 5. Both nodes have a local IP address of 10.0.0.1. However, as mentioned before, each node knows the other nodes by their ONDA 1. In other words, node I knows node 5 as the node with IP address 192.168.6.33. Consequently, the packet exchange takes place according to the following steps:
1. Node 1 sends a packet 1000 as shown in figure 6a with destination address set to 192.168.6.33 (ONDA 1 of node 5) and with the source address set to its own local address.
2. Once arrived at the cluster gateway GW1, the packet is put on the tunnel to ONR1, see figure 6b for the resulting packet 1010.
3. At ONR1, the extra header is stripped off. Based on the destination address and the input tunnel, the ONR notices that the packet is heading for a node in cluster 2 and the source address is translated to node 1's ONDA 1 (see tunnel identification part in Table 1). See figure 6c showing the resulting packet 1020.
4. The packet is routed to the correct tunnel. Based on the source address and the output tunnel, the ONR notices that the packet originated from a node in cluster 1, which implies that the destination address is an ONDA 1. Consequently, the destination address is translated to node 5's local address, see figure 6d showing the resulting packet 1030.
5. Note that in step 4, the packet is first routed to the appropriate tunnel before translating the destination address. Now, the packet is put on the tunnel to cluster 2, see figure 6e showing the resulting packet 1040.
6. Once arrived at cluster gateway GW2, the tunnel header is stripped off, and the packet shown at step 4 is delivered to node 5.

Notice that node 5 just received a packet from a node with IP address 192.168.6.1. This is the address (ONDA 1) at which node 5 can reach node 1, whereas the procedure of translating local IP addresses to ONDAs and vice versa, is similar to the above.

### Example 2

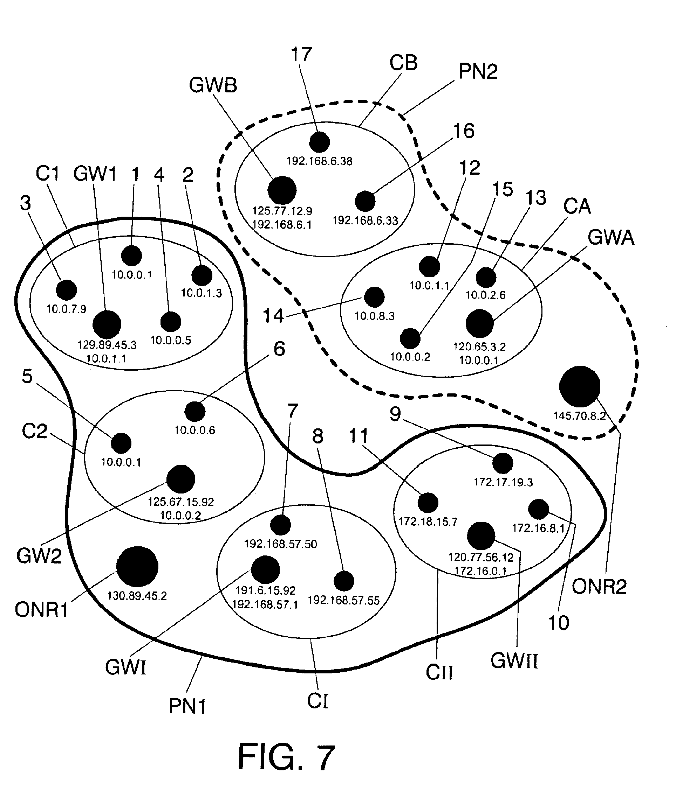

Consider the network setup shown in figure 7, where PN 1 is the same PN as in figure 5, and where PN2 is a new PN, consisting of cluster A (CA) and cluster B (CB). Each of the clusters has a gateway (GWA, GWB) for communicating to the public network and the ONR2. Each cluster of PN2 comprises a plurality of nodes (numbered consecutively in the figure from 12 to 17). In the figure the local IP addresses of the nodes and the gateways are depicted as well as the public IP addresses of the gateways and ONRs. The ONR central tables for ONR1 and ONR2 are shown in Table 1 and Table 3, respectively.

**Table 3: ONR 2 central table**

| **Node** | **ONDA 1** | **ONDA 2** | **ONDA 3** | **Local address** | **Public IP (CoA)** |
|---|---|---|---|---|---|
| | | | | | |
| 12 | 192.168.6.1 | 172.16.8.1 | 10.4.25.1 | 10.0.1.1 | 120.65.3.2 |
| 13 | 192.168.6.2 | 172.16.8.2 | 10.4.25.2 | 10.0.2.6 | 120.65.3.2 |
| 14 | 192.168.6.3 | 172.16.8.3 | 10.4.25.3 | 10.0.8.3 | 120.65.3.2 |
| 15 | 192.168.6.4 | 172.16.8.4 | 10.4.25.4 | 10.0.0.2 | 120.65.3.2 |
| | | | | | |
| 16 | 192.168.6.39 | 172.16.8.39 | 10.4.25.39 | 192.168.6.33 | 125.77.12.9 |
| 17 | 192.168.6.35 | 172.16.8.35 | 10.4.25.35 | 192.168.6.38 | 125.77.12.9 |

| **CLUSTER_ID** | **Source** | **Destination** | | **to cluster A** | **to cluster B** |
|---|---|---|---|---|---|
| | | | | | |
| cluster A | 145.70.8.2 | 120.65.3.2 | | 1,1* | 2,1 |
| cluster B | 145.70.8.2 | 125.77.12.9 | | 1,2 | 2,2 |
| * n,m is source address from UIAn and destination address from UIAm | | | | | |

Cluster B uses locally an address range that overlaps with the ONDA 1 range of PN2. Hence, the nodes in cluster B cannot know the PN devices by their ONDA 1. Instead, the nodes in cluster B should know the other PN devices by one of their other ONDAs. In this example, the nodes of cluster B know the other PN devices by their ONDA 2, whereas the nodes in cluster A know the other PN devices by their ONDA 1. For this, the cluster gateway GWA and GWB routing tables are set up as shown in Table 4.

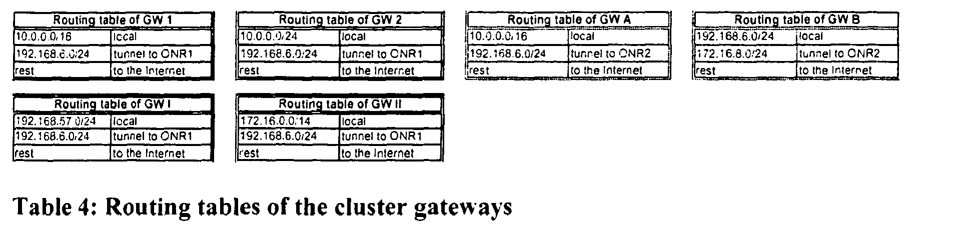

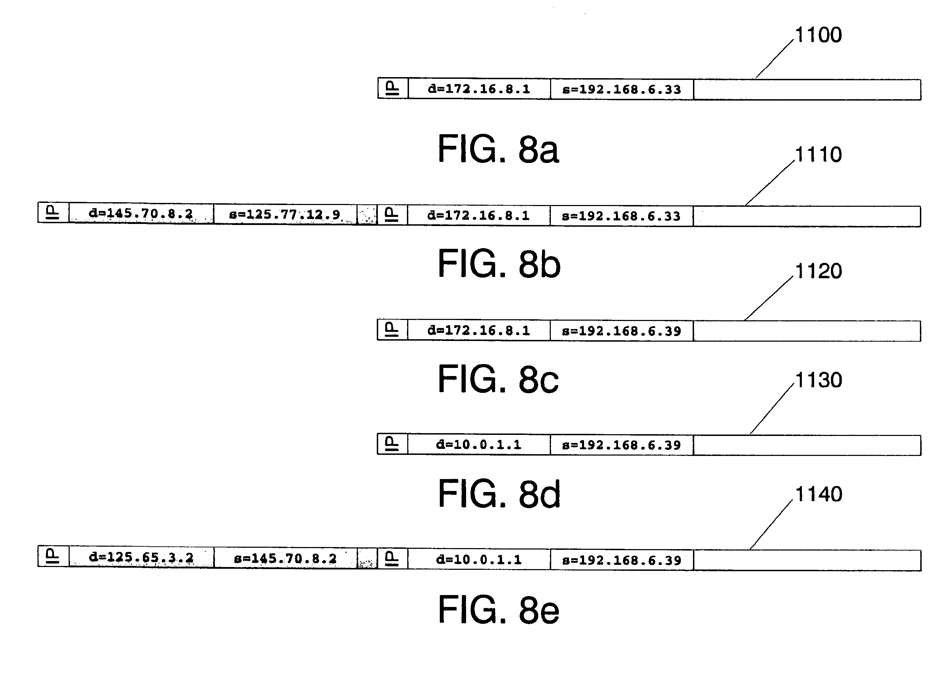

Now, suppose node 16 wants to exchange packets with node 12. Node 16 has a local address of 192.168.6.33, and node 12 has a local address of 10.0.1.1. However, as mentioned before, node 16 knows node 12 by its ONDA 2, whereas node 12 knows node 16 by its ONDA 1. Consequently, the packet exchange takes place according to the following steps:
1. Node 16 sends a packet 1100 (as shown in figure 8a) with destination address set to 172.16.8.1 (ONDA 2 of node 12) and with the source address set to its own local address.
2. Once arrived at the cluster gateway GWB, the packet is put on the tunnel to ONR 2, see figure 8b for the resulting packet 1110.
3. At ONR 2, the extra header is stripped off. Based on the destination address and the source tunnel, the ONR notices that the packet is heading for a node in cluster A and the source address is translated to node 16's ONDA 1 (see tunnel identification part in Table 3). See figure 8c showing the resulting packet 1120.
4. The packet is routed to the correct tunnel. Based on the source address and the destination tunnel, the ONR notices that the packet originated from a node in cluster B, which implies that the destination address is an ONDA 2. Consequently, the destination address is translated to node 12's local address. See figure 8d showing the resulting packet 1130.
5. Note that in step 4, the packet is first routed to the appropriate tunnel before translating the destination address. Now, the packet is put on the tunnel to cluster A. See figure 8e showing the resulting packet 1140.
6. Once arrived at cluster gateway GWA, the tunnel header is stripped off, and the packet shown at step 4 is delivered to node 12.

Notice that node 12 just received a packet from a node with IP address 192.168.6.39. This is the address (ONDA 1) at which node 12 can reach node 16, whereas the procedure is similar to the above.

### Example 3

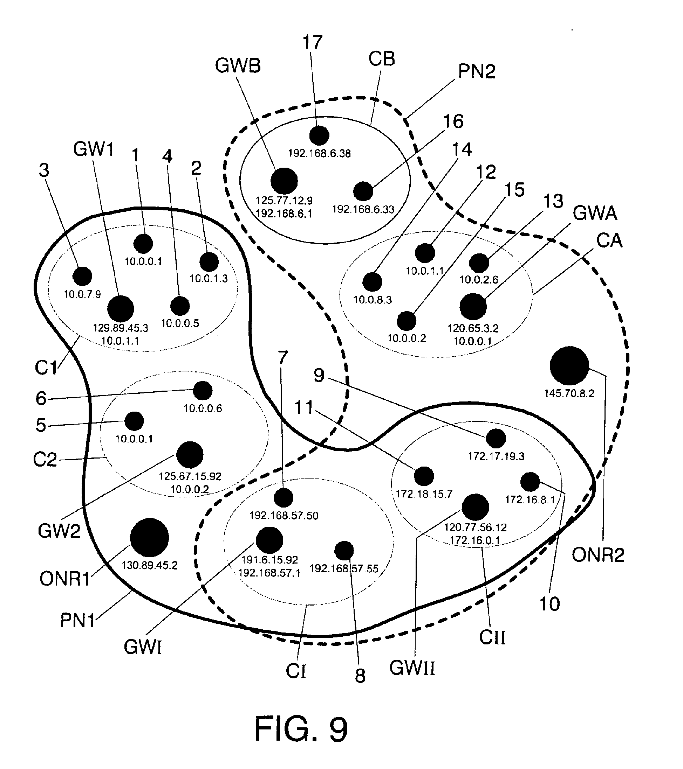

Consider the network setup shown in figure 9, where PN 1 is the same PN as in figure 5. PN2 is the same PN as in figure 7 but including also Cluster I and Cluster II of PN1. In the figure the local IP addresses of the nodes and the gateways are depicted as well as the public IP addresses of the gateways and ONR1. The ONR central tables for ONR1 and ONR2 are shown in Table 1 and, Table 5, respectively.

**Table 5: ONR 2 central table**

| **Node** | **ONDA 1** | **ONDA 2** | **ONDA 3** | **Local address** | **Public IP (CoA)** | | |
|---|---|---|---|---|---|---|---|
| | | | | | | | |
| 12 | 192.168.6.1 | 172.16.8.1 | 10.4.25.1 | 10.0.1.1 | 120.65.3.2 | | |
| 13 | 192.168.6.2 | 172.16.8.2 | 10.4.25.2 | 10.0.2.6 | 120.65.3.2 | | |
| 14 | 192.168.6.3 | 172.16.8.3 | 10.4.25.3 | 10.0.8.3 | 120.65.3.2 | | |
| 15 | 192.168.6.4 | 172.16.8.4 | 10.4.25.4 | 10.0.0.2 | 120.65.3.2 | | |
| | | | | | | | |
| 16 | 192.168.6.39 | 172.16.8.39 | 10.4.25.39 | 192.168.6.33 | 125.77.12.9 | | |
| 17 | 192.168.6.35 | 172.16.8.35 | 10.4.25.35 | 192.168.6.38 | 125.77.12.9 | | |
| | | | | | | | |
| 7 | 192.168.6.52 | 172.16.8.52 | 10.4.25.52 | 192.168.57.50 | 191.6.15.92 | | |
| 8 | 192.168.8.53 | 172.16.8.53 | 10.4.25.53 | 192.168.57.55 | 191.6.15.92 | | |
| | | | | | | | |
| 9 | 192.168.6.73 | 172.16.8.73 | 10.4.25.73 | 172.17.19.3 | 120.77.56.12 | | |
| 10 | 192.168.6.67 | 172.16.8.67 | 10.4.25.67 | 172.16.8.1 | 120.77.56.12 | | |
| 11 | 192.168.6.74 | 172.16.8.74 | 10.4.25.74 | 172.18.15.7 | 120.77.56.12 | | |

| **CLUSTER_ID** | **Source** | **Destination** | | **to cluster A** | **to cluster B** | **to cluster I** | **to cluster II** |
|---|---|---|---|---|---|---|---|
| | | | | | | | |
| **cluster A** | 145.70.8.2 | 120.65.3.2 | | 1,1* | 2,1 | 2,1 | 3,1 |
| **cluster B** | 145.70.8.2 | 125.77.12.9 | | 1,2 | 2,2 | 2,2 | 3,2 |
| **cluster I** | 145.70.8.2 | 191.6.15.92 | | 1,2 | 2,2 | 2,2 | 3,2 |
| **cluster II** | 145.70.8.2 | 120.77.56.12 | | 1,3 | 2,3 | 2,3 | 3,3 |
| * n,m is source address from UlAn and destination address from UIAm | | | | | | | |

Before adding cluster I and cluster II to PN2, PN1 already consisted of the clusters 1, 2, I, and II. Consequently, the PN devices in cluster I and II know the PN devices of PN1 by their ONDA 1, i.e., by an address in the range 192.168.6.0/24.

When adding cluster I to PN2, ONR2 notices that its primary address range (ONDA 1 range) is already in use at cluster I. More specifically, that is the same range at which the cluster I devices know the rest of the PN 1 devices. As a result, the nodes of cluster I will know other PN2 devices by their ONDA 2.

When adding cluster II to PN2, ONR 2 notices that both its primary and secondary address ranges are in use at cluster II. More specifically, the nodes of cluster II know the rest of the PN1 devices by their address from the ONDA 1 range of PN1 (192.168.6.0/24), which overlaps with the ONDA 1 range of PN2. Moreover, the nodes in cluster II know each other by their local addresses in the range 172.16.0.0/14, which overlaps with the ONDA 2 range of PN 2 (172.16.8.0/24). As a result, the nodes of cluster II will know other PN2 devices by their ONDA 3. For this, the cluster gateway GWI and GWII routing tables are set up as shown in Table 6.

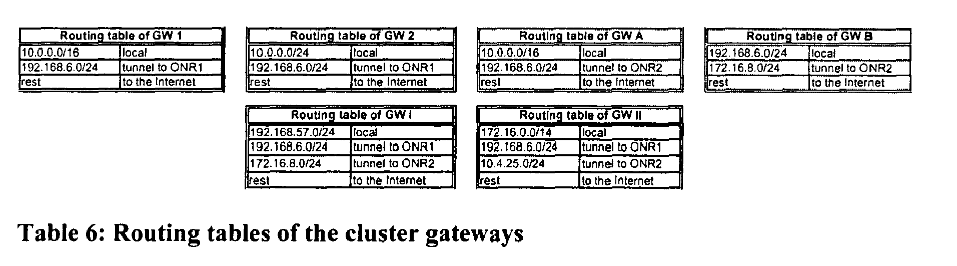

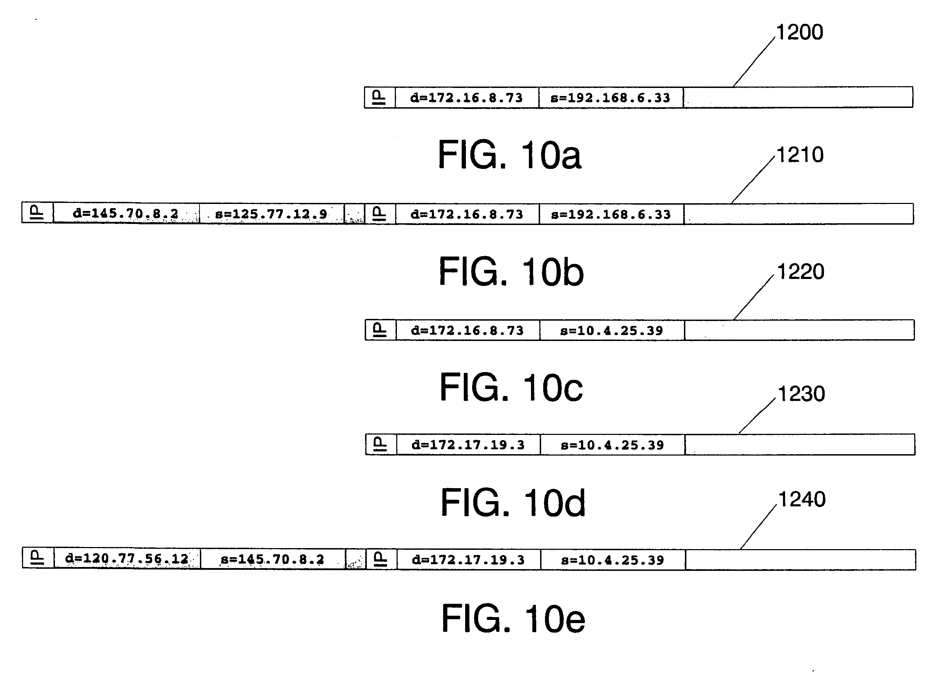

Now, suppose node 16 wants to exchange packets with node 9. Node 16 has a local address of 192.168.6.33, and node 9 has a local address of 172.17.19.3. However, as mentioned before, node 16 knows node 9 by its ONDA 2, whereas node 9 knows node 16 by its ONDA 3. Consequently, the packet exchange takes place according to the following steps:
1. Node 16 sends a packet 1200 (as shown in figure 10a) with destination address set to 172.16.8.73 (ONDA 2 of node 9) and with the source address set to its own local address.
2. Once arrived at the cluster gateway GWB, the packet is put on the tunnel to ONR2, see figure 10b for the resulting packet 1210.
3. At ONR2, the extra header is stripped off. Based on the destination address and the input tunnel, the ONR notices that the packet is heading for a node in cluster II and the source address is translated to node 16's ONDA 3 (see tunnel identification part in Table 5). See figure 10c for the resulting packet 1220.
4. The packet is routed to the correct tunnel. Based on the source address and the destination tunnel, the ONR notices that the packet originated from a node in cluster B, which implies that the destination address is an ONDA 2. Consequently, the destination address is translated to node 9's local address. See figure 10d for the resulting packet 1230.
5. Note that in step 4, the packet is first routed to correct tunnel before translating the destination address. Now, the packet is put on the tunnel to cluster II, see figure 10e for the resulting packet 1240.
6. Once arrived at cluster gateway GWII, the tunnel header is stripped off, and the packet shown at step 4 is delivered to node 9.

Notice that node 9 just received a packet from a node with IP address 10.4.25.39. This is the address (ONDA 3) at which node 9 can reach node 16, whereas the procedure is similar to the above.

### Second embodiment:

According to a second embodiment of the invention, the ONR is collocated with one of the gateways of the clusters.

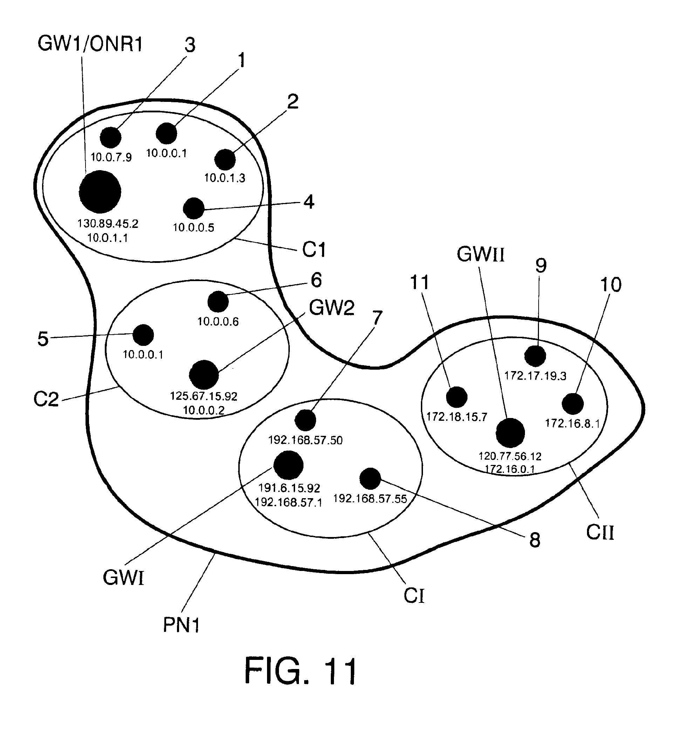

Consider the network setup of Figure 11, i.e., a single PN1 composed of four clusters cluster 1 (C1), cluster 2 (C2), Cluster I (CI) and cluster II (CII) and ONR1 virtually connecting these clusters, Each of the clusters has a gateway (GW1, GW2, GWI, GWII) for communicating to the public network. ONR1 is collocated with GW1. Each cluster comprises a plurality of nodes (numbered consecutively in the figure from I to 11). In the figure the local IP addresses of the nodes and the gateways are depicted as well as the public IP addresses of the ONR1/GW1 and the other gateways.

The ONR I central table is depicted in Table 7, whereas Table 8 shows the configuration needed at the cluster gateways. The primary ONDA range of PN 1 is 192.168.6.0/24, which is not used by any of PN 1's clusters. Consequently, each PN device knows the other PN devices by their ONDA 1. PN devices in the same cluster also know each other by their local address.

**Table 7: ONR 1 central table**

| **Node** | **ONDA 1** | **ONDA 2** | **ONDA 3** | **Local address** | **Public IP (CoA)** | | |
|---|---|---|---|---|---|---|---|
| | | | | | | | |
| 1 | 192.168.6.1 | 172.18.12.1 | 10.18.143.1 | 10.0.0.1 | 130.89.45.2 | | |
| 2 | 192.168.6.2 | 172.18.12.2 | 10.18.143.2 | 10.0.0.5 | 130.89.45.2 | | |
| 3 | 192.168.6.3 | 172.18.12.3 | 10.18.143.3 | 10.0.1.3 | 130.89.45.2 | | |
| 4 | 192.168.6.4 | 172.18.12.4 | 10.18.143.4 | 10.0.7.9 | 130.89.45.2 | | |
| | | | | | | | |
| 5 | 192.168.6.33 | 172.18.12.33 | 10.18.143.33 | 10.0.0.1 | 125.67.15.9 | | |
| 6 | 192.168.6.34 | 172.18.12.34 | 10.18.143.34 | 10.0.0.6 | 125.67.15.9 | | |
| | | | | | | | |
| 7 | 192.168.6.49 | 172.18.12.49 | 10.18.143.49 | 192.168.57.50 | 191.6.15.92 | | |
| 8 | 192.168.6.50 | 172.18.12.50 | 10.18.143.50 | 192.168.57.55 | 191.6.15.92 | | |
| | | | | | | | |
| 9 | 192.168.6.69 | 172.18.12.69 | 10.18.143.69 | 172.17.19.3 | 120.77.56.12 | | |
| 10 | 192.168.6.65 | 172.18.12.65 | 10.18.143.65 | 172.16.8.1 | 120.77.56.12 | | |
| 11 | 192.168.6.72 | 172.18.12.72 | 10.18.143.72 | 172.18.15.7 | 120.77.56.12 | | |

| **CLUSTER_ID** | **Source** | **Destination** | | **to cluster 1** | **to cluster 2** | **to cluster I** | **to cluster II** |
|---|---|---|---|---|---|---|---|
| | | | | | | | |
| cluster 1 | 130.89.45.2 | 130.89.45.2 | | 1,1* | 1,1 | 1,1 | 1,1 |
| cluster 2 | 130.89.45.2 | 125.67.15.9 | | 1,1 | 1,1 | 1,1 | 1,1 |
| cluster 1 | 130.89.45.2 | 191.6.15.92 | | 1,1 | 1,1 | 1,1 | 1,1 |
| cluster II | 130.89.45.2 | 120.77.56.12 | | 1,1 | 1,1 | 1,1 | 1,1 |
| * n,m is source address from UlAn and destination address from UIAm | | | | | | | |

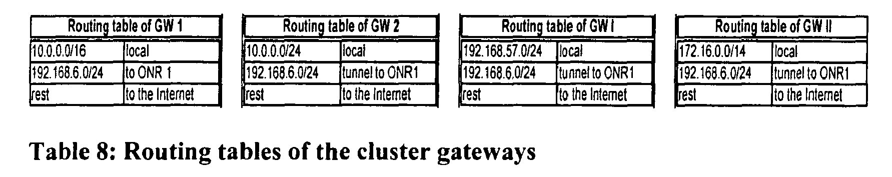

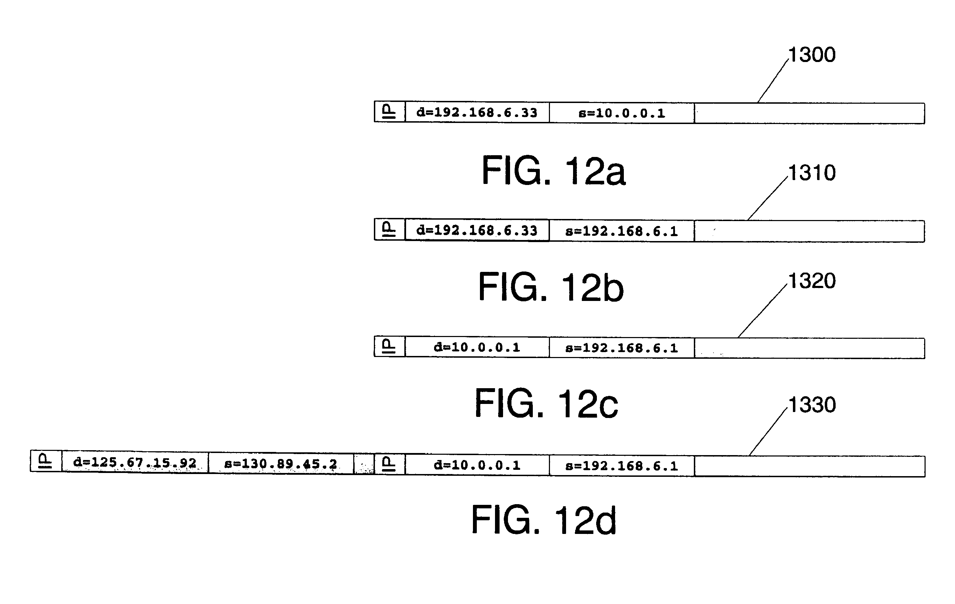

Now, suppose node 1 wants to exchange packets with node 5. Both nodes have a local IP address of 10.0.0.1. However, as mentioned before, each node knows the other nodes by their ONDA 1. In other words, node 1 knows node 5 as the node with IP address 192.168.6.33. Consequently, the packet exchange takes place according to the following steps:
1. Node 1 sends a packet 1300 (see figure 12a) with destination address set to 192.168.6.33 (ONDA 1 of node 5) and with the source address set to its own local address.
2. Once arrived at the cluster gateway GW1, the packet is forwarded internally to ONR1.
3. Based on the destination address and the fact that the packet came from the collocated GW1, the ONR notices that the packet is heading for a node in cluster 2 and the source address is translated to node 1's ONDA 1 (see tunnel identification part in Table 7). See figure 12b for the resulting packet 1310.
4. The packet is routed to the correct tunnel. Based on the source address and the output tunnel, the ONR notices (Note that if the ONDA ranges are nonoverlapping, then the translation from ONDA to local address can be done without taking into account the cluster which the packet originates from) that the packet originated from a node in cluster 1, which implies that the destination address is an ONDA 1. Consequently, the destination address is translated to node 5's local address, see figure 12c for the resulting packet 1320.
5. Note that in step 4, the packet is first routed to the appropriate tunnel before translating the destination address. Now, the packet is put on the tunnel to cluster 2. See figure 12d for the resulting packet 1330.
6. Once arrived at cluster gateway GW 2, the tunnel header is stripped off, and the packet shown at step 4 is delivered to node 5.

Notice that node 5 just received a packet from a node with IP address 192.168.6.1. This is the ONDA at which node 5 can reach node 1, whereas the procedure of translating local IP addresses to ONDAs and vice versa, is similar to the above.

As will be recognized by those skilled in the art, the innovative concepts described in the present application can be modified and varied over a wide range of applications. In the embodiments described with reference to the drawings addressing according to Internet Protocol version 4 is used but of course the invention can also be implemented in networks using other protocols. Furthermore, the invention has been described with reference to centralised overlay network routing means but of course the invention may also be used with decentralized overlay network routing means. Alternatively, a part of the overlay network routing means is distributed over at least some of the gateways of the clusters in the network and another part is embodied in a centralized node. This "hybrid mode" may be particularly useful for route optimization, in case that some of the clusters are used far from the centralized node, for example in a foreign country.

Furthermore, the invention has been described with reference to a network in which the nodes of all the clusters can be addressed by using an overlay address but of course the invention is also applicable to a network in which the nodes of one or more of the clusters are only addressable by their local addresses. Finally, the invention has been described with reference to the use of tunnelling protocols for forwarding the packets from the gateways to the overlay network routing means and vice versa. Of course also other ways may be used for routing the packets by means of encapsulating them.

Accordingly, the scope of patented subject matter should not be limited to any of the specific exemplary teachings discussed, but is instead defined by the following claims. Any reference signs in the claims shall not be construed as limiting the scope.

## Claims

1. Network (PN 1) comprising:
- a plurality of clusters (C1,C2,CI,CII), which can be coupled to each other, said clusters comprising a gateway (GW1,GW2,GWI,GWII) and at least a node (1,...,11),
- the nodes having local addresses to be used for transmitting a packet to other nodes in the same cluster, the local addresses being unique within the same cluster, but possibly overlapping with the local addresses of nodes outside the cluster, and
- the nodes having at least one overlay address (ONDA 1, ONDA 2, ONDA 3), which is different from the at least one overlay address of the other nodes in the network and which is to be used by the nodes of at least one cluster for transmitting a packet to the nodes in the other clusters,
- the network comprising overlay network routing means (ONR1) adapted for storing the local addresses and the overlay addresses and a mapping between them,
- the gateway of the at least one cluster being adapted to forward a packet having an overlay address as destination address, originating from a node in the at least one cluster to the overlay network routing means,
- the overlay network routing means further being adapted for translating the overlay address in the packet to the local address of the destination node, and for forwarding the packet to the gateway of the cluster to which the destination node having the overlay address belongs, and
- the gateway of the cluster of the destination node being adapted for routing the packet to the destination node based on the local address thereof.

2. The network according to claim 1, wherein the overlay network routing means are further adapted for translating the local address of the source node into the overlay address thereof and for including said overlay address as source address into the packet to be forwarded to the gateway of the cluster of the destination node.

3. Network according to claim 1 or 2, wherein
- the nodes additionally having at least one further overlay address, which is different from the at least one further overlay address of the other nodes in the network and which is to be used by the nodes of at least one further cluster for transmitting a packet to the nodes in the other clusters,
- the overlay network routing means being adapted for storing the local addresses and the further overlay addresses and a mapping between them,
- the gateway of the at least one further cluster being adapted to forward a packet having a further overlay address as destination address, originating from a node in the at least one further cluster to the overlay network routing means,
- the overlay network routing means further being adapted for translating the further overlay address to the local address of the destination node and for forwarding the packet to the gateway of the cluster to which the destination node having the further overlay address belongs.

4. Network according to claim 3 wherein the overlay network routing means are further adapted for using either the mapping between the local addresses and the overlay addresses or the mapping between the local addresses and the further overlay addresses for the step of translating the overlay address or the further overlay address of the destination node into the local address thereof, depending on the source cluster that the packet is received from.

5. Network according to claim 3 or 4 wherein the overlay network routing means are further adapted for translating the local address of the source node into either the overlay address thereof or (one of) the further overlay address(es) thereof, depending on the destination cluster that the packet is to be routed to and for including said overlay address or further overlay address as source address into the packet to be forwarded to the gateway of the cluster of the destination node.

6. Network according to any of the preceding claims, wherein at least some of the gateways are adapted for encapsulating the packet, preferably by using a tunneling protocol in order to forward the packet to the overlay network routing means.

7. Network according to any of the preceding claims, wherein the overlay network routing means are adapted for encapsulating the packet, preferably by using a tunneling protocol in order to forward the packet to at least some of the gateways.

8. Network according to any of the preceding claims, wherein the gateways of the clusters and the overlay network routing means have globally unique addresses from a first address range and the nodes have local addresses and overlay addresses from a second address range which is different from the first address range.

9. Network according to claim 8, wherein the addresses are Internet Protocol addresses, preferably addresses according to Internet Protocol version 4.

10. Network according to any of the preceding claims wherein the overlay network routing means are embodied in a centralized overlay network router.

11. Network according to claim 10 wherein the centralized overlay network router is collocated with one of the gateways of the clusters in the network.

12. Network according to any of claims 1-9 wherein the overlay network routing means are distributed over at least some of the gateways of the clusters in the network.

13. Network according to any of claims 1-9 wherein a part of the overlay network routing means is distributed over at least some of the gateways of the clusters in the network and another part is embodied in a centralized node.

14. Overlay network routing means for use in a network according to any of the claims 1-13 adapted for:
- storing the local addresses and the overlay addresses of the nodes of the network and a mapping between them,
- receiving the packet having an overlay address as destination address from the gateway of the at least one cluster,
- translating the overlay address to the local address of the destination node, and
- forwarding the packet to the gateway of the cluster to which the destination node having the overlay address belongs.

15. Gateway of a cluster for use in a network according to any of the claims 1-13 adapted to forward the packet having an overlay address as destination address originating from nodes in the cluster to the overlay network routing means.

16. Method for use in a network according to any of the claims 1-13, comprising the following steps:
a: a node of the at least one cluster transmitting a packet to the gateway of the at least one cluster, the packet comprising an overlay address as destination address of its destination node in one of the other clusters of the network,
b: the gateway of the at least one cluster forwarding the packet to the overlay network routing means,
c: the overlay network routing means translating the overlay address to the local address of the destination node, and
d: the overlay network routing means forwarding the packet to the gateway of the cluster to which the destination node having the overlay address belongs, and
e: the gateway of the cluster of the destination node routing the packet to the destination node based on the local address thereof.

17. A computer program comprising computer program code means adapted to perform the steps "c" and "d" of claim 16, when said program is run by the overlay network routing means.

18. A computer program comprising computer program code means adapted to perform the step "b" of claim 16, when said program is run by the gateway of the first cluster.

19. A computer program as claimed in claim 17 or 18 embodied on a computer readable medium.

20. A carrier medium carrying the computer program of claim 17 or 18.
